# EUROPÄISCHE PATENTSCHRIFT

(11) **EP 3 389 890 B1**
(45) Veröffentlichungstag und Bekanntmachung des Hinweises auf die Patenterteilung: **02.10.2019**
(21) Anmeldenummer: 16819417.3
(22) Anmeldetag: 02.12.2016
(51) Int. Cl.: B21D 28/02, B26D 5/00, G01L 1/18

(54) **VERFAHREN UND VORRICHTUNG ZUM TRENNEN EINES WERKSTÜCKES**
METHOD AND DEVICE FOR CUTTING A WORKPIECE
PROCÉDÉ ET DISPOSITIF DE SÉPARATION D'UNE PIÈCE

(30) Priorität: 14.12.2015 AT 510642015
(43) Veröffentlichungstag der Anmeldung: 24.10.2018
(73) Patentinhaber: Materials Center Leoben Forschung GmbH, 8700 Leoben (AT)
(72) Erfinder: EBNER, Reinhold, 8793 Trofaiach (AT); ECKER, Werner, 8700 Leoben (AT); KLÜNSNER, Thomas, 8332 Edelsbach bei Feldbach (AT); KROBATH, Martin, 8700 Leoben (AT); MARSONER, Stefan, 8061 St. Radegund (AT)
(74) Vertreter: Wirnsberger & Lerchbaum Patentanwälte OG
(86) Internationale Anmeldenummer: PCT/AT2016/060116
(87) Internationale Veröffentlichungsnummer: WO 2017/100810

(56) Entgegenhaltungen:
- EP-A1- 0 183 648
- EP-A2- 1 782 897
- DE-A1- 10 101 724
- JP-A- H06 198 357
- US-A1- 2007 227 223

## Beschreibung

Weiter betrifft die Erfindung eine Vorrichtung zum Trennen eines Werkstückes, umfassend einen Stempel.

Aus dem Stand der Technik, insbesondere aus den Druckschriften EP 1 782 897 A2, JP H06 198357 A, US 2007/227223 A1, EP 0 183 648 A1 und DE 101 01 724 A1 sind verschiedene Verfahren zum Trennen eines Werkstückes aus Blech oder dergleichen bekannt geworden. Bei einer endabmessungsnahen Erstellung von Werkstücken eignet sich insbesondere Stanzen, Scherschneiden oder Feinschneiden.

Beim Feinschneiden wirken mehrere Kräfte, welche bei einer entsprechend langen bzw. oftmaligen Benutzung einer Feinschneidvorrichtung eine Qualität einzelner Elemente derselben negativ beeinflussen, da sich deren Oberflächen aufgrund der Belastung und von Aufschweißungen verändern. Die Elemente, insbesondere der sich bewegende Stempel, sind einem fortlaufenden Verschleiß sowie einer Gefahr eines spontanen Ausbrechens einer Schnittkante und einem Abplatzen eines Stempelkopfes ausgesetzt, wodurch letztlich auch eine Qualität des abzutrennenden Werkstückes deutlich herabgesetzt wird. Eine für einen Schneidprozess nicht mehr ausreichende Güte des Stempels wird oftmals erst anhand der mit einer minderen Qualität gefertigten Werkstücke erkannt. Diese Werkstücke können jedoch nicht verwendet bzw. müssen als Ausschuss entsorgt werden. Schlussendlich führt eine andauernde Verschlechterung einer Qualität des Stempels zu einem Bruch desselben und dieser muss getauscht werden, was mit Kosten einhergeht.

Es besteht ein technisches Bedürfnis, eine Veränderung in einem Produktionsprozess, insbesondere eine Verschlechterung einer Qualität eines Stempels so rechtzeitig zu erkennen, dass keine Werkstücke mit minderer Qualität hergestellt werden bzw. rechtzeitig Lebensdauer verlängernde Maßnahmen für Werkzeugkomponenten wie den Stempel gesetzt werden können. Ein bekannter Ansatz zur Erkennung von Veränderungen im Produktionsprozess ist es, Schneidkräfte eines Stempels zu untersuchen bzw. zu messen. Dieser Ansatz hat sich aber noch nicht als geeignet erwiesen, um eine Lebensdauer eines Stempels zufriedenstellend vorauszusagen.

Hier setzt die Erfindung an. Aufgabe der Erfindung ist es, ein Verfahren der eingangs genannten Art anzugeben, mit welchem eine Veränderung in einem Trennprozess rechtzeitig erkannt und insbesondere eine Einsatzdauer eines Stempels zuverlässig vorausgesagt werden kann, insbesondere vor einem Bruch desselben.

Ein weiteres Ziel der Erfindung ist es, eine Vorrichtung der eingangs genannten Art anzugeben, mit welcher eine Verschlechterung einer Qualität eines Stempels zuverlässig erkennbar und insbesondere eine Einsatzdauer des Stempels voraussagbar ist.

Die verfahrensmäßige Aufgabe wird erfindungsgemäß dadurch gelöst, dass bei einem Verfahren der eingangs genannten Art Rückzugskräfte, welche auf den Stempel beim Zurückziehen in eine Ausgangsposition nach einem Trennprozess wirken, in Abhängigkeit einer Stempelposition gemessen werden, wobei durch Vergleich mit bekannten Daten vorhergesagt wird, wann der Stempel nachzubearbeiten oder gegebenenfalls zu ersetzen ist.

Ein mit der Erfindung erzielter Vorteil ist insbesondere darin zu sehen, dass durch die Messung der Rückzugskräfte, welche auf den Stempel wirken, eine Veränderung in einem Trennprozess zuverlässig vor einem Bruch des Stempels erkannt wird. Darüber hinaus ist es mit dem erfindungsgemäßen Verfahren auch möglich, eine Güte des Werkstückes vorauszusagen, welches durch den Trennprozess hergestellt wird. Mit dem erfindungsgemäßen Verfahren werden somit Veränderungen in einem Produktionsprozess zuverlässig erkannt.

Im Rahmen der Erfindung wurde insbesondere erkannt, dass die Rückzugskräfte, welche auf den Stempel beim Zurückziehen in eine Ausgangsposition nach einem Trennprozess wirken, besonders relevant für das Werkzeugversagen sind. Im Gegensatz zu einer Vorwärtsbewegung des Stempels treten beim Rückzug desselben nämlich große Zugkräfte auf, durch welche der Stempel immer mehr geschädigt wird. Vor allem ein Stempel aus höherfesten Werkstoffen wie beispielsweise einem an sich verschleißfesten und daher grundsätzlich langlebigen Hartmetall oder gegebenenfalls höherfesten Stahl wird dieser durch die Rückzugskräfte kontinuierlich geschädigt, was Ausgangspunkt für ein Materialversagen ist. Darüber hinaus wird ein Verschleiß bzw. eine Schädigung des Stempels auch durch sogenannte Aufschweißungen verursacht bzw. beschleunigt. Bei jeder Hubbewegung des Stempels wird dieser mit kleinen Materialteilen des Werkstückes oder Bestandteilen einer Trennvorrichtung beschichtet. Diese Aufschweißungen beeinflussen die Reibung zwischen dem Werkstück und den benachbarten Werkzeugkomponenten und damit weiter auch die Zugkräfte und die Rissbildung im Stempel.

Darüber hinaus ist es mit einem erfindungsgemäßen Verfahren auch möglich, die technisch bzw. in Bezug auf eine Güte der Werkstücke praktikable Einsatzdauer des Stempels so vorherzusagen, dass ein Trennprozess gestoppt wird, bevor sich eine Qualität desselben so verschlechtert, dass das Werkstück unbrauchbar ist. Darüber hinaus kann auch eine gesamte Lebensdauer bzw. Standzeit des Stempels bestimmt werden. Insbesondere ist dabei von Vorteil, dass die Qualität des Trennprozesses ohne besondere Qualitätskontrolle des bzw. der Werkstücke selbst erkannt wird. Es kann somit bloß auf Basis der Rückzugskräfte ein Zeitpunkt zum Nachschärfen oder Nachschneiden des Stempels zuverlässig vorhergesagt werden, wodurch eine Stempelstandzeit und eine Werkstückgüte gleichzeitig optimierbar sind.

Zweckmäßig ist es, wenn die Rückzugskräfte mit einem am Stempel angeordneten Sensor gemessen werden. Beispielsweise ist der Sensor als scheibenförmiger Dünnschichtdrucksensor ausgebildet, welcher an einem oberen Ende des Stempels angeordnet wird und eine auf den Stempel wirkende Kraftänderung beim Rückzug desselben misst. Bei einer Verwendung eines piezoresistiven Dünnschichtkraftsensors entsprechen die Rückzugskräfte einer Reduktion einer Druckvorspannung zwischen dem Stempel und einer Aufnahme desselben innerhalb einer Werkzeugmaschine beim Herausziehen des Stempels. Der scheibenförmige Sensor weist dabei beispielsweise die gleiche Querschnittsfläche wie der Stempel auf, sodass Rückzugskräfte besonders genau gemessen werden können. Vom Sensor werden weiter bevorzugt Daten aufgenommen, insbesondere aus Reibungskräften, welche zu einer Auswerteeinheit übertragen werden. Der Sensor kann weiter auch als Dehnungsmessstreifen oder andersartiges piezobasiertes System ausgebildet sein.

Es ist weiter von Vorteil, wenn aus Daten aus den gemessenen Rückzugskräften und bekannten Daten ein mathematisches Modell erstellt wird, mit welchem eine Lebensdauer des Stempels vorausgesagt wird. Dadurch werden in weiterer Folge auch Abweichungen von einem Normalzustand eines unbeschädigten Stempels erkannt bzw. angezeigt. Durch die bereits bekannten Daten, welche beispielsweise über eine Simulation erstellt und mit den Daten aus den gemessenen Rückzugskräften kombiniert werden, kann die Lebensdauer des Stempels noch genauer vorhergesagt werden. Bei den bekannten Daten kann es sich auch um Daten handeln, die einmalig im Sinne einer Kalibrierung aufgenommen werden, bis der Stempel bricht und somit eine reale Darstellung des Verlaufes der Rückzugskräfte während der Standzeit des Stempels darstellen. Standardwerte aus bekannten Daten werden in einer theoretischen Sollkurve verwertet, welche mit einer Messkurve verglichen und zum mathematischen Modell verarbeitet werden. Üblich ist es dabei, wenn das mathematische Modell von der Auswerteeinheit bzw. einer Recheneinheit erstellt wird und sowohl ein analytisches als auch numerischen Modell sein kann. Insbesondere werden dabei die beim Rückzug des Stempels auftretenden und sich zeitlich verändernden Reibungskräften berücksichtigt. Insbesondere ist es günstig, wenn das mathematische, theoretische Modell kontinuierlich mit Messwerten abgeglichen und dadurch validiert wird. Das mathematische Modell detektiert Abweichungen von gemessenen Daten zu bekannten Daten eines unbeschädigten Werkzeuges bzw. Stempels.

Vorteilhaft ist, wenn vom mathematischen Modell laufend Daten aus den gemessenen Rückzugskräften berücksichtigt werden. Somit ist das mathematische Modell auf eine beliebige Vorrichtung zum Trennen eines Werkstückes mit einem Stempel anwendbar, da dadurch zum einen laufend die Rückzugskräfte, insbesondere Reibungskräfte, gemessen werden und zum anderen diese Daten permanent im mathematischen Modell verarbeitet werden. Bevorzugt ist die Auswerteeinheit so ausgebildet, dass von dieser laufend gemessene Daten mit bereits bekannten, theoretischen Daten kombiniert werden, wodurch ein validiertes Modell erstellt wird. Vom mathematischen Modell werden Zusammenhänge zwischen Kennwerten eines zu bearbeitenden Materials bzw. Werkstoffes und anderen Prozessgrößen wie beispielsweise Fließgrenze, Banddicke, Schmierzustand, Reibungskoeffizient bzw. daraus resultierende Größen wie Schnittkraft beschrieben. Insbesondere wird das mathematische Modell für eine qualitative und/oder quantitative Voraussage einer Rückzugskraft des Stempels bzw. von deren Abhängigkeit von einer Zeit und/oder einer Stempelposition eingesetzt.

Dabei ist es weiter von Vorteil, wenn durch eine Auswertung des mathematischen Modells eine Lebensdauer des Stempels verlängernde Maßnahmen getroffen werden. Mit den Daten des mathematischen Modells können Echtzeitentscheidungen getroffen werden, sodass Lebensdauer verlängernde Maßnahmen zielgerichtet gesetzt werden können. Hierfür ist es günstig, wenn eine dafür notwendige schnelle Verarbeitung von Prozessgrößen und deren Veränderung über ein eingebettetes System verwirklicht wird. Dies wird mit dem mathematischen Modell in Recheneinheiten direkt an einer Werkzeugmaschine bzw. Vorrichtung erreicht.

Es ist nicht zwingend, kann jedoch günstig sein, wenn zumindest eine durch den Trennprozess verursachte Vibration und/oder Temperatur gemessen werden. Daten aus einer solchen Geräusch- bzw. Schallmessung und Temperaturmessung werden sodann mit den Daten aus den Rückzugskräften korreliert und in weiterer Folge in das mathematische Modell eingearbeitet. Zur Messung von zumindest einer Schallart können einer oder mehrere Sensoren an einer beliebigen Stelle einer Vorrichtung zum Trennen eines Werkstückes vorgesehen sein, von welchen durch verschiedene Bewegungsarten verursachte Geräuschentwicklungen gemessen werden. Darüber hinaus können noch weitere Sensoren vorgesehen sein wie beispielsweise ein Beschleunigungssensor, ein Temperatursensor und/oder ein Schwingungssensor. Durch die weiteren Sensoren kann eine Ausbreitungsgeschwindigkeit von Rissen im Stempel aufgenommen werden. Darüber hinaus werden von den weiteren Messwerten Indikatoren zum Setzen von Lebensdauer verlängernden Maßnahmen geliefert.

Es ist günstig, wenn das Werkstück von einem Stempel aus einem Hartmetall oder einem Stahl gegen eine Matrize gedrückt wird, um das Werkstück zu trennen. Empfindlichkeiten von Hartmetallen und Stählen sind zumindest teilweise bekannt, wodurch Werkstoffwerte in das mathematische Modell miteinbezogen werden, sodass die Lebensdauer eines solchen Stempels möglichst exakt bestimmt wird. Mit einem Stempel aus einem Hartmetall oder gegebenenfalls einem höherfesten Stahl wird das Werkstück mit einer besonders scharfen Kante getrennt. Hartmetall ist an sich langlebig, da dieses auch bei hoher mechanischer Belastung nur in einem geringen Ausmaß geschädigt wird. Allerdings wurde im Rahmen der Erfindung erkannt, dass gerade diese geringen bzw. im Vergleich zu Schnittkräften kleinen Zuganteile bei einer Werkzeugbelastung, die beim Rückziehen des Stempels auftreten, entscheidend für ein Materialversagen sind. Mit dem erfindungsgemäßen Verfahren ist es möglich, auch solche geringe Zuganteile bei einer Werkzeugbelastung zu erkennen bzw. zu messen, um in weiterer Folge eine Einsatzdauer und gegebenenfalls Lebensdauer des Stempels aus Hartmetall vorauszusagen. Insbesondere bei einem Stempel aus Hartmetall ist es günstig, eine Verschlechterung einer Qualität bzw. eine Einsatzdauer desselben voraussagen zu können, da dieser und somit ein Austausch desselben relativ teuer ist. Nunmehr können Zeitpunkte für ein regelmäßiges Nachschärfen und gegebenenfalls rechtzeitiges Polieren eines Stempels aus Hartmetall zuverlässig vorausgesagt werden, wodurch der Stempel aus Hartmetall maximal genutzt werden kann, ehe dieser auszutauschen ist.

Der Stempel ist bevorzugt zylindrisch und rotationssymmetrisch ausgebildet. Dieser kann aber auch komplex geformt sein. Neben einer Verwendung eines Stempels aus Hartmetall oder höherfestem Stahl kann beispielsweise auch ein Stempel aus Keramik verwendet werden.

Zweckmäßigerweise wird eine gesamte Lebensdauer eines Stempels beim Feinschneiden überwacht. Dadurch werden sich verändernde Rückzugskräfte und eventuell zusätzliche andere Parameter andauernd kontrolliert bzw. beobachtet. In Kombination mit dem mathematischen Modell wird schlussendlich ein selbstlernendes Verfahren zum Feinschneiden bzw. zur Überwachung eines solchen Prozesses geschaffen. Beim Feinschneiden wird das Werkstück, welches beispielsweise als Blech ausgebildet ist, von einer Pressplatte und Matrize festgehalten bzw. unterhalb der Pressplatte durchgeführt, wobei dieses bei einem Trennprozess von einer an der Pressplatte angeordneten Ringzacke festgehalten wird. Verursacht durch radial zu einer Stempelachse wirkende Anpressdrücke und/oder axiale Relativverschiebungen werden am Stempel sogenannte Aufschweißungen aufgebracht, welche üblicherweise metallischer Natur sind. Um das Werkstück mit einem scharfen Schnitt zu trennen bzw. zu schneiden, wird dieses von einem Gegenhalter gegen den Stempel gehalten.

Das weitere Ziel wird erreicht, wenn bei einer Vorrichtung der eingangs genannten Art beim Stempel ein Sensor angeordnet ist, um Rückzugskräfte, welche auf den Stempel beim Zurückziehen in eine Ausgangsposition nach einem Trennprozess wirken, in Abhängigkeit einer Stempelposition zu messen, wobei eine Auswerteeinheit vorgesehen ist, welche vom Sensor aufgenommene Daten auswertet und mit bekannten Daten abgleicht, um eine Einsatzdauer und/oder Lebensdauer des Stempels vorauszusagen.

Ein damit erzielter Vorteil ist insbesondere darin zu sehen, dass durch das Messen der Rückzugskräfte mit dem Sensor eine Einsatzdauer des Stempels und gegebenenfalls eine Güte des Werkstückes voraussagbar ist. Wenngleich hierzu ein beliebiger Sensor verwendbar ist, ist dieser bevorzugt als scheibenförmiger Dünnschichtdrucksensor ausgebildet und an einem oberen Ende des Stempels angeordnet. Darüber hinaus weist der Sensor bevorzugt dieselbe Querschnittsfläche und dieselbe Rotationssymmetrie wie der Stempel auf, sodass eine Kräftemessung möglichst präzise erfolgt. Im Rahmen der Erfindung wurde erkannt, dass die Rückzugskräfte einen wesentlichen Anteil an einem Versagen des Stempels haben und somit entscheidend für eine Lebensdauer des Stempels sind. Ausschlaggebend ist dafür die auf den Stempel wirkende Zugbelastung, welche bei einem Rückzug desselben auftritt. Der Sensor misst Rückzugskräfte, welche auf den Stempel wirken, wenn dieser nach einem Trennprozess wieder in eine Ausgangsposition verfahren wird.

Es ist vorteilhaft, wenn zumindest ein weiterer Sensor zur Messung von zumindest einer durch den Trennprozess verursachten Vibration und/oder Temperatur vorgesehen ist. Zur Messung eines Geräusches ist zum Beispiel ein Schallsensor angeordnet, welcher den durch den Rückzug des Stempels und/oder das Schneiden verursachten Schall misst. Darüber hinaus können weitere Sensoren vorgesehen sein wie beispielsweise ein Beschleunigungssensor, Temperatursensor und/oder ein Schwingungssensor. Daten aus allen Sensoren werden mit Vorteil miteinander korreliert, um eine Lebensdauer des Stempels möglichst exakt vorauszusagen. Damit kann ein Zeitpunkt zum Nachschleifen, Polieren oder Nachschärfen des Stempels noch genauer festgelegt werden.

Besonders vorteilhaft ist es, wenn eine Auswerteeinheit vorgesehen ist, welche vom Sensor aufgenommene Daten auswertet und mit bekannten Daten abgleicht, um eine Einsatzdauer und/oder Lebensdauer des Stempels vorauszusagen. Die Auswerteeinheit wertet aufgenommene Daten unmittelbar aus und erstellt mit bereits bekannten Daten, welche beispielsweise aus einer Simulation stammen, ein mathematisches Modell. Dieses mathematische Modell berücksichtigt bevorzugt laufend aufgenommene Daten aus den Rückzugskräften und sagt in weiterer Folge eine Lebensdauer des Stempels bzw. einen Zeitpunkt zum Nachbearbeiten desselben voraus. Das mathematische Modell kann als analytisches oder numerisches Modell bereitgestellt sein, welches Zusammenhänge zwischen Kennwerten eines zu bearbeitenden Materials bzw. Werkstoffes und anderen Prozessgrößen wie beispielsweise Fließgrenze, Banddicke, Schmierzustand, Reibungskoeffizient bzw. allgemeine daraus resultierende Größen wie Schnittkraft beschreibt. Insbesondere sagt das mathematische Modell eine Rückzugskraft des Stempels qualitativ und/oder quantitativ bzw. deren Abhängigkeit von einer Zeit und/oder einer Stempelposition voraus.

Dabei ist es weiter zweckmäßig, wenn die Auswerteeinheit als eingebettetes System ausgebildet ist, um Prozessgrößen und deren Veränderung effizient verarbeiten zu können. Die Auswerteeinheit ist hierzu beispielsweise als elektronischer Rechner direkt an der Vorrichtung bzw. an einer Werkzeugmaschine angeordnet. Durch eine Auswertung des mathematischen Modells sind eine Lebensdauer des Stempels verlängernde Maßnahmen treffbar. Mit den Daten des mathematischen Modells können Echtzeitentscheidungen getroffen werden, sodass Lebensdauer verlängernde Maßnahmen zielgerichtet gesetzt werden können.

Günstig ist es, wenn eine Matrize vorgesehen ist, um das Werkstück vom Stempel gegen diese zu drücken und zu trennen. Der Stempel kann beispielsweise aus einem Hartmetall, einem Stahl oder einer Keramik gebildet sein. Empfindlichkeiten von Hartmetallen und Stählen bzw. Keramiken sind zumindest teilweise bekannt, wodurch Werkstoffwerte in das mathematische Modell miteinbezogen werden, sodass die Lebensdauer eines solchen Stempels möglichst exakt bestimmbar ist. Mit einem Stempel aus einem Hartmetall oder gegebenenfalls einem höherfesten Stahl ist das Werkstück mit einer besonders scharfen Kante trennbar. Hartmetall ist an sich langlebig, da dieses auch bei hoher mechanischer Belastung nur in einem geringen Ausmaß geschädigt wird. Allerdings wurde im Rahmen der Erfindung erkannt, dass gerade diese geringen bzw. im Vergleich zu Schnittkräften kleinen Zuganteile bei einer Werkzeugbelastung, die beim Rückziehen des Stempels auftreten, entscheidend für ein Materialversagen sind. Mit der erfindungsgemäßen Vorrichtung ist es möglich, auch solche geringe Zuganteile bei einer Werkzeugbelastung zu erkennen bzw. zu messen, um in weiterer Folge eine Einsatzdauer und gegebenenfalls Lebensdauer des Stempels aus Hartmetall vorauszusagen. Insbesondere bei einem Stempel aus Hartmetall ist es günstig, eine Verschlechterung einer Qualität bzw. eine Einsatzdauer desselben voraussagen zu können, da dieser und somit ein Austausch desselben relativ teuer ist.

Es ist von Vorteil, wenn die Vorrichtung als Feinschneidevorrichtung ausgebildet ist. Alternativ kann die Vorrichtung beispielsweise auch als Stanzvorrichtung ausgebildet sein. Mit einer Feinschneidevorrichtung ist es möglich, das Werkstück mit einem besonders glatten Schnitt zu trennen. Beim Feinschneiden mit einem Stempel aus Hartmetall oder höherfestem Stahl treten jedoch große Rückzugskräfte auf, welche sich abhängig von einer Stempelposition und einer Lebensdauer des Stempels verändern. Bevorzugt erfolgen eine solche Messung der Rückzugskräfte und eine Auswertung derselben über eine gesamte Lebensdauer des Stempels bzw. der Feinschneidevorrichtung. Dadurch ist eine selbstlernende Feinschneidevorrichtung geschaffen. Bei der Feinschneidevorrichtung ist eine Pressplatte zum Halten des Werkstückes vorgesehen. Diese ist dabei oberhalb des Werkstückes angeordnet und weist zur Fixierung des Werkstückes beim Trennprozess eine Ringzacke auf. Beim Trennen des Werkstückes fährt der Stempel zuerst durch die Pressplatte und trennt dann das Werkstück. Beim Zurückfahren in eine Ausgangsposition treten Zugkräfte auf, welche der Sensor misst. Es ist weiter ein Gegenhalter vorgesehen, welcher unter dem Werkstück gegenüber dem Stempel angeordnet ist. Dadurch ist das Werkstück mit einem glatten Schnitt an einer Matrize mit dem Stempel trennbar.

Eine Verwendung einer erfindungsgemäßen Vorrichtung erfolgt mit Vorteil beim Voraussagen einer Lebensdauer eines Stempels beim Feinschneiden. Insbesondere wird diese zur Entscheidungsfindung über eine Lebensdauer des Stempels verlängernde Maßnahmen verwendet.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
- Fig. 1: eine erfindungsgemäße Vorrichtung;
- Fig. 2: einen Ausschnitt aus einer erfindungsgemäßen Vorrichtung gemäß Fig. 1;
- Fig. 3: ein Foto eines Stempels;
- Fig. 4: ein Diagramm mit Rückzugskräften in Abhängigkeit einer Stempelposition.

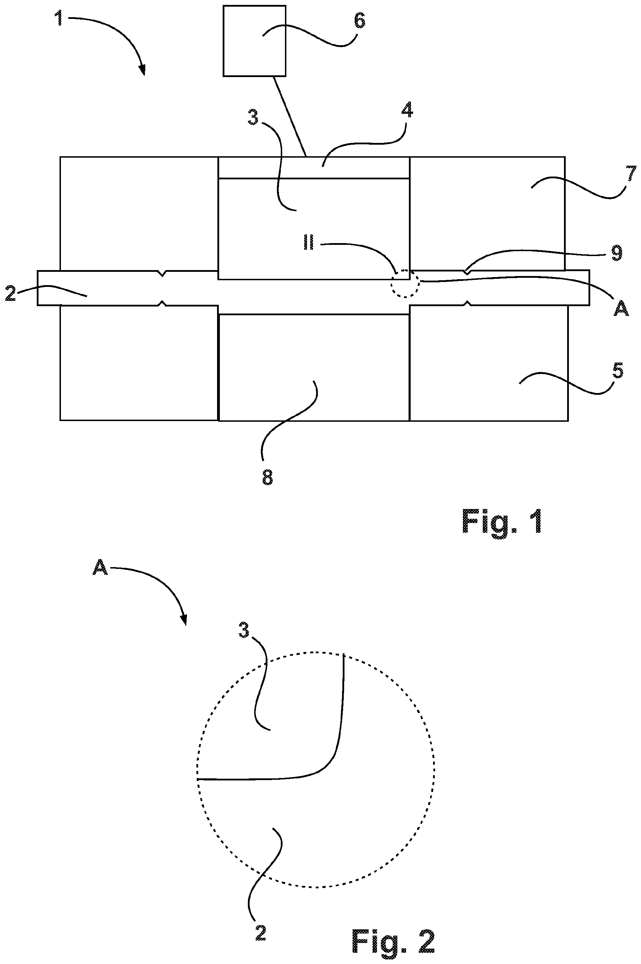

Fig. 1 zeigt einen Schnitt durch eine erfindungsgemäße Vorrichtung 1 zur Überwachung eines Trennprozesses eines Werkstückes 2, welche als Feinschneidevorrichtung ausgebildet ist. Es kann aber auch vorgesehen sein, dass die Vorrichtung 1 beispielsweise zum Stanzen ausgebildet ist. Das Werkstück 2 ist beispielsweise als Blech ausgebildet, aus welcher definierte Formen geschnitten werden.

Die Vorrichtung 1 umfasst einen Stempel 3 mit einem als Dünnschichtdrucksensor ausgebildeten Sensor 4 zur Messung von auf den Stempel 3 wirkenden Rückzugskräften. Der Sensor 4 ist an einem oberen Ende des Stempels 3 angeordnet und weist dieselbe Querschnittsfläche und dieselbe Rotationssymmetrie wie der Stempel 3 auf, sodass eine Kräftemessung möglichst präzise erfolgt. Der Stempel 3 ist über dessen gesamte Länge bzw. Höhe zylinderförmig ausgebildet. Weiter umfasst die Vorrichtung 1 eine Pressplatte 7, einen Gegenhalter 8 und eine Matrize 5. Zum Festhalten des Werkstückes 2 beim Trennprozess weist die Pressplatte 7 eine Ringzacke 9 auf.

Neben dem Sensor 4 zur Messung von Rückzugskräften können noch weitere nicht dargestellte Sensoren vorgesehen sein, wie beispielsweise ein Schallsensor, ein Schwingungssensor, ein Temperatursensor und/oder ein Beschleunigungssensor.

Ferner umfasst die Vorrichtung 1 eine Auswerteeinheit 6, welche kabellos oder über Kabel oder dergleichen mit dem Sensor 4 verbunden ist. Die Auswerteeinheit 6 nimmt Daten des Sensors 4 zu den Rückzugskräften auf, kombiniert diese mit bereits bekannten Daten und erstellt in weiterer Folge ein mathematisches Modell zur Einsatz- bzw. Lebensdauervorhersage des Stempels 3. Die Lebensdauer des Stempels 3 hängt insbesondere von den Rückzugskräften ab, da eine Amplitude von Zugspannungen beim Herausziehen des Stempels 3 groß ist, wobei diese insbesondere bei einem an sich langlebigen Stempel 3 aus Hartmetall oder Stahl für die Einsatzdauer entscheidend sind.

Bei einem erfindungsgemäßen Verfahren zur Überwachung eines Trennprozesses eines Werkstückes 2 mit einem Stempel 3 werden auf diesen wirkende Rückzugskräfte in Abhängigkeit einer Stempelposition gemessen, wodurch eine restliche Einsatzdauer des Stempels 3 bestimmt werden kann. Die Rückzugskräfte, welche insbesondere von einer Reibung abhängen, werden von einem Sensor 4 gemessen, wobei der Sensor 4 am oder beim Stempel 3 angeordnet ist. Durch die Messung der Rückzugskräfte, welche auf den Stempel 3 wirken, wird eine Schädigung zuverlässig vor einem Bruch desselben erkannt. Darüber hinaus ist es mit dem erfindungsgemäßen Verfahren auch möglich, eine Güte des durch das Feinschneiden hergestellten Werkstückes 2 vorauszusagen. Die Rückzugskräfte, welche auf den Stempel 3 beim Zurückziehen in eine Ausgangsposition nach einem Trennprozess wirken, sind besonders relevant für die Werkzeugschädigung. Im Gegensatz zu einer Vorwärts- bzw. Schnittbewegung des Stempels 3 treten beim Rückzug desselben nämlich große Zugkräfte auf, durch welche der Stempel 3 immer mehr geschädigt wird. Insbesondere bei einem Stempel 3 aus Hartmetall oder gegebenenfalls höherfestem Stahl wird dieser durch die Rückzugskräfte kontinuierlich geschädigt.

Fig. 2 zeigt einen Ausschnitt A des Stempels 3, welcher aufgrund von sich verändernden Rückzugskräften besonders abgenutzt wird. Die an sich scharfe Kontur wird durch mehrere Schneidvorgänge abgerundet. Weiter verändert sich auch das Gefüge des Stempels 3, sodass dieser in weiterer Folge bricht oder einreißt. Eine zweckmäßige Anwendung des mathematischen Modells ermöglicht es weiter, dass eine Stelle einer höchsten Schädigung des Stempels 3 genau lokalisiert wird. Es wird dadurch die restliche Einsatzdauer des Stempels 3 bestimmt, sodass dieser noch vor einem Bruch desselben nachgeschliffen oder nachgeschnitten werden kann.

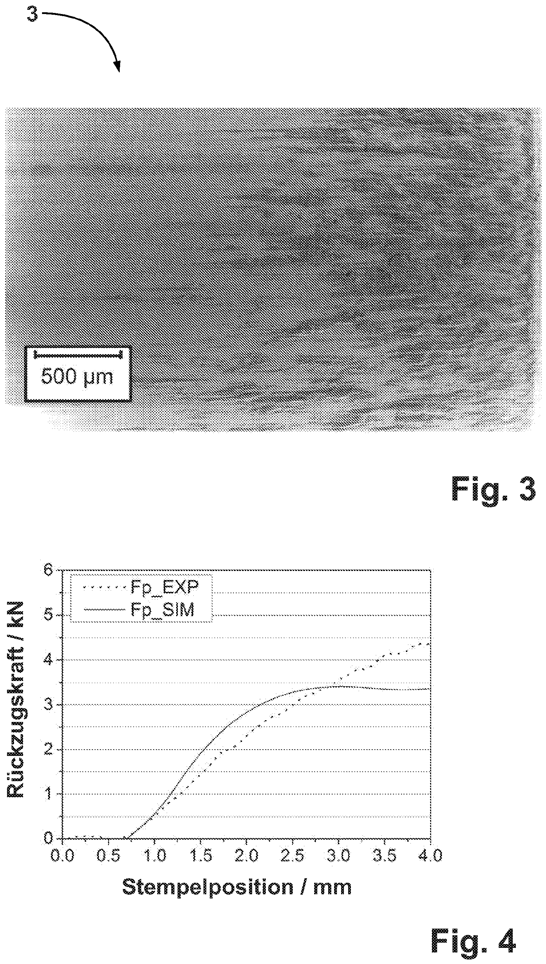

Ein Foto eines Stempels 3 ist in Fig. 3 gezeigt, wobei ein Stempel 3 mit sogenannten Aufschweißungen an dessen Oberfläche dargestellt ist. Eine Schädigung des Stempels 3 wird auch durch diese Aufschweißungen, insbesondere metallische Aufschweißungen verursacht. Bei jeder Hubbewegung des Stempels 3 wird dieser mit kleinen Materialteilen des Werkstückes 2 oder Bestandteilen der Feinschneidevorrichtung beschichtet. Diese Aufschweißungen beeinflussen weiter die auf den Stempel 3 wirkenden Zugkräfte.

Darüber hinaus ist es mit einem erfindungsgemäßen Verfahren möglich, die Einsatzdauer des Stempels 3 so vorherzusagen, dass ein Trennprozess gestoppt wird, bevor sich eine Qualität desselben so verschlechtert, dass das Werkstück 2 unbrauchbar ist. Insbesondere ist dabei von Vorteil, dass die Qualität des Trennprozesses ohne besondere Qualitätskontrolle des bzw. der Werkstücke 2 selbst erkannt wird. Es wird ein Zeitpunkt zum Nachschärfen oder Nachschneiden des Stempels 3 zuverlässig erkannt.

Fig. 4 zeigt ein Diagramm mit Rückzugskräften in Abhängigkeit einer Position des Stempels 3. Die gestrichelte Linie zeigt hierbei experimentell ermittelte Werte Fp_EXP, wohingegen die durchgezogene Linie simulierte Werte Fp_SIM zeigt. Ein Vergleich der beiden Werte Fp_EXP, Fp_SIM zeigt eine gute Übereinstimmung. Die experimentell ermittelten Werte Fp_EXP werden in die simulierten Werte Fp_SIM eingearbeitet bzw. mit diesen kombiniert, sodass in weiterer Folge aus den simulierten Werten Fp_SIM ein validiertes, theoretisches Modell entsteht. Wie in Fig. 4 gezeigt, werden die Rückzugskräfte mehrmals an verschiedenen Stempelpositionen bzw. zu unterschiedlichen Prozesszeiten mit unterschiedlichem Schnittfortschritt gemessen. Durch Vergleich mit den theoretischen bzw. simulierten Werten bzw. gegebenenfalls einer realen Kalibrierkurve für einen analogen Prozess kann vorhergesagt werden, wann der Stempel 3 nachzuschleifen oder gegebenenfalls zu ersetzen ist.

## Patentansprüche

1. Verfahren zum Trennen eines Werkstückes (2) mit einem Stempel (3), **dadurch gekennzeichnet, dass** Rückzugskräfte, welche auf den Stempel (3) beim Zurückziehen in eine Ausgangsposition nach einem Trennprozess wirken, in Abhängigkeit einer Stempelposition gemessen werden, wobei durch Vergleich mit bekannten Daten vorhergesagt wird, wann der Stempel (3) nachzubearbeiten oder gegebenenfalls zu ersetzen ist.

2. Verfahren nach Anspruch 1, **dadurch gekennzeichnet, dass** die Rückzugskräfte mit einem am Stempel (3) angeordneten Sensor (4) gemessen werden.

3. Verfahren nach Anspruch 1 oder 2, **dadurch gekennzeichnet, dass** aus Daten aus den gemessenen Rückzugskräften und bekannten Daten ein mathematisches Modell erstellt wird, mit welchem eine Lebensdauer des Stempels (3) vorausgesagt wird.

4. Verfahren nach Anspruch 3, **dadurch gekennzeichnet, dass** vom mathematischen Modell laufend Daten aus den gemessenen Rückzugskräften berücksichtigt werden.

5. Verfahren nach Anspruch 3 oder 4, **dadurch gekennzeichnet, dass** durch eine Auswertung des mathematischen Modells eine Lebensdauer des Stempels (3) verlängernde Maßnahmen getroffen werden.

6. Verfahren nach einem der Ansprüche 1 bis 5, **dadurch gekennzeichnet, dass** zumindest eine durch den Trennprozess verursachte Vibration und/oder Temperatur gemessen werden.

7. Verfahren nach einem der Ansprüche 1 bis 6, **dadurch gekennzeichnet, dass** das Werkstück (2) von einem Stempel (3) aus einem Hartmetall oder einem Stahl gegen eine Matrize (5) gedrückt wird, um das Werkstück (2) zu trennen.

8. Vorrichtung (1) zum Trennen eines Werkstückes (2), umfassend einen Stempel (3), **dadurch gekennzeichnet, dass** beim Stempel (3) ein Sensor (4) angeordnet ist, um Rückzugskräfte, welche auf den Stempel (3) beim Zurückziehen in eine Ausgangsposition nach einem Trennprozess wirken, in Abhängigkeit einer Stempelposition zu messen, wobei eine Auswerteeinheit (6) vorgesehen ist, welche vom Sensor (4) aufgenommene Daten auswertet und mit bekannten Daten abgleicht, um eine Einsatzdauer und/oder Lebensdauer des Stempels (3) vorauszusagen.

9. Vorrichtung (1) nach Anspruch 8, **dadurch gekennzeichnet, dass** zumindest ein weiterer Sensor zur Messung von zumindest einer durch den Trennprozess verursachten Vibration und/oder Temperatur vorgesehen ist.

10. Vorrichtung nach Anspruch 9, **dadurch gekennzeichnet, dass** die Auswerteeinheit (6) als eingebettetes System ausgebildet ist.

11. Vorrichtung (1) nach einem der Ansprüche 8 bis 10, **dadurch gekennzeichnet, dass** eine Matrize (5) vorgesehen ist.

12. Vorrichtung (1) nach einem der Ansprüche 8 bis 11, **dadurch gekennzeichnet, dass** die Vorrichtung (1) als Feinschneidevorrichtung ausgebildet ist.

## Claims

1. A method for separating a workpiece (2) using a punch (3), **characterized in that** retraction forces, which act on the punch (3) during retraction to an initial position after a separation process, are measured as a function of a punch position, wherein, by comparison with known data, when the punch (3) is to be reworked or, if necessary, replaced is predicted.

2. The method according to claim 1, **characterized in that** the retraction forces are measured using a sensor (4) arranged on the punch (3).

3. The method according to claim 1 or 2, **characterized in that** from data from the measured retraction forces and known data, a mathematical model is created, using which a service life of the stamp is predicted (3).

4. The method according to claim 3, **characterized in that** data from the measured retraction forces are continuously taken into account by the mathematical model.

5. The method according to claim 3 or 4, **characterized in that**, by means of an analysis of the mathematical model, measures extending a service life of the punch (3) are taken.

6. The method according to one of claims 1 to 5, **characterized in that** at least one vibration and/or temperature caused by the separation process is measured.

7. The method according to one of claims 1 to 6, **characterized in that** the workpiece (2) is pressed by a punch (3) made from a hard metal or a steel against a die (5), in order to separate the workpiece (2).

8. A device (1) for separating a workpiece (2), comprising a punch (3), **characterized in that** a sensor (4) is arranged on the punch (3), in order to measure retraction forces, which act on the punch (3) during retraction to an initial position after a separation process, as a function of a punch position, wherein an analysis unit (6) is provided, which analyses data recorded by the sensor (4) and compares the same with known data, in order to predict a service life and/or working life of the punch (3).

9. The device (1) according to claim 8, **characterized in that** at least one further sensor is provided for measuring at least one vibration and/or temperature caused by the separation process.

10. The device according to claim 9, **characterized in that** the analysis unit (6) is constructed as an embedded system.

11. The device (1) according to one of claims 8 to 10, **characterized in that** a die (5) is provided.

12. The device (1) according to one of claims 8 to 11, **characterized in that** the device (1) is constructed as a fine-blanking device.

## Revendications

1. Procédé de sectionnement d'une pièce (2) au moyen d'un poinçon (3), **caractérisé en ce que** des forces de rétraction qui agissent sur le poinçon (3) lors de la rétraction vers une position de départ après un processus de sectionnement sont mesurées en fonction d'une position du poinçon, dans lequel il est prévu, par comparaison avec des données connues, quand le poinçon (3) doit être repris ou remplacé le cas échéant.

2. Procédé selon la revendication 1, **caractérisé en ce que** les forces de rétraction sont mesurées au moyen d'un capteur (4) disposé au niveau du poinçon (3)

3. Procédé selon la revendication 1 ou 2, **caractérisé en ce que**, à partir des données de rétraction mesurées et des données connues, il est établi un modèle mathématique grâce auquel une durée de vie du poinçon (3) est prévue.

4. Procédé selon la revendication 3, **caractérisé en ce que** le modèle mathématique tient compte en permanence de données des forces de rétraction mesurées.

5. Procédé selon la revendication 3 ou 4, **caractérisé en ce que**, par une exploitation du modèle mathématique, des mesures prolongeant une durée de vie du poinçon (3) sont prises.

6. Procédé selon une des revendications 1 à 5, **caractérisé en ce qu'**au moins une vibration et/ou température dues au processus de sectionnement sont mesurées.

7. Procédé selon une des revendications 1 à 6, **caractérisé en ce que** la pièce (2) est imprimée par un poinçon (3) dans un métal dur ou un acier contre une matrice (5) pour sectionner la pièce (2).

8. Dispositif (1) de sectionnement d'une pièce (2), comprenant un poinçon (3), **caractérisé en ce qu'**un capteur (4) est disposé dans le poinçon (3) pour mesurer les forces de rétraction qui agissent sur le poinçon (3) lors de la rétraction vers une position de départ après un processus de sectionnement en fonction d'une position du poinçon, dans lequel il est prévu une unité d'exploitation (6) qui exploite les données reçues par le capteur (4) et les compare à des données connues pour prévoir une durée d'utilisation et/ou une durée de vie du poinçon (3).

9. Dispositif (1) selon la revendication 8, **caractérisé en ce qu'**au moins un autre capteur pour mesurer au moins une vibration et/ou une température dues au processus de sectionnement est prévu.

10. Dispositif selon la revendication 9, **caractérisé en ce que** l'unité d'exploitation (6) est réalisée sous forme d'un système intégré.

11. Dispositif (1) selon une des revendications 8 à 10, **caractérisé en ce qu'**une matrice (5) est prévue.

12. Dispositif (1) selon une des revendications 8 à 11, **caractérisé en ce que** le dispositif (1) est réalisé sous forme d'un dispositif de coupe de précision.
